Europäisches Patentamt

European Patent Office

Office européen des brevets

(19)

(11) Veröffentlichungsnummer: **0 101 756**
**A1**

(12)

# EUROPÄISCHE PATENTANMELDUNG

(21) Anmeldenummer: 82108002.5

(22) Anmeldetag: 31.08.82

(51) Int. Cl.³: **A 23 L 1/236**
**A 61 K 9/20**

(43) Veröffentlichungstag der Anmeldung:
07.03.84 Patentblatt 84/10

(84) Benannte Vertragsstaaten:
AT BE CH DE FR GB IT LI LU NL SE

(71) Anmelder: CHIMICASA GMBH
Wiesentalstrasse 81
CH-7000 Chur(CH)

(72) Erfinder: Wolf, Erich, Dr.
Florianstrasse 19
D-5066 Overath-Marialinden(DE)

(72) Erfinder: Deininger, Rolf, Dr.
Fürst-Pückler-Strasse 44
D-5000 Köln 41(DE)

(74) Vertreter: Hach, Hans Karl, Dr.
Tarunstrasse 23
D-6950 Mosbach-Waldstadt(DE)

(54) Wasserlösliche Süssungstablette.

(57) Eine Süßungstablette besteht aus 70 bis 95 % APM (=L-Aspartyl-L-phenylalaninmethylester) mit einer Korngröße von 0,01 bis 0,4 mm, bis zu 1 % Tablettierhilfsmittel und zum Rest aus einem Löslichkeitsbeschleuniger, der ein in Wasser quellender Gallertbildner ist und Isoliermäntel bildet, die die eingesetzten APM-Körnchen umhüllen.

EP 0 101 756 A1

## Wasserlösliche Süßungstablette

Die Erfindung betrifft eine wasserlösliche, durch Pressen verfestigte Süßungstablette mit APM (= L-Aspartyl-L-phenylalaninmethylester) als Süßungsmittel und einem Bruchteil des APM-Gewichtes an Löslichkeitsbeschleuniger.

APM ist schwer wasserlöstlich; da das APM jedoch bei Benutzung möglichst schnell in Lösung gehen soll, ist es wünschenswert, daß das APM möglichst schnell aus der Tablette in Lösung gehen kann. Dies wird dadurch erreicht, daß, bezogen auf das Trockengewicht, wie folgt eingesetzt sind:

70 bis 95 %, vorzugsweise 75 bis 80 %, APM mit einer Korngröße von 0,01 bis 0,4 mm (Millimeter)

0 bis 1 % Tablettierhilfsmittel, und

der Rest Löslichkeitsbeschleuniger, der ein in Wasser quellender, vorzugsweise quervernetzter, Gallertbildner ist;

und dadurch, daß die eingesetzten APM-Körnchen mit einem Isoliermantel umhüllt sind, der aus eingetrockneter Gallerte des Löslichkeitsbeschleunigers besteht.

Die Isoliermäntel verhindern, daß die einzelnen APM-Körnchen beim Tablettieren oder in der Tablette miteinander in Kontakt geraten und miteinander verkleben. Die APM-Körnchen gelangen vielmehr beim Auflösen der Tablette vereinzelt in Kontakt mit der Lösung, weil die Isoliermäntel im Wasser sehr schnell zerstört werden und dann die APM-Körnchen als feine und daher leichter lösliche Partikel im Wasser freigesetzt werden.

— 2 —

Durch das Versetzen einer Mischung von APM und dem Löslichkeitsbeschleuniger mit Wasser quillt der Löslichkeitsbeschleuniger gallertartig an. Diese Gallerte umhüllt die
APM-Körnchen. Beim Trocknen der Mischung verfestigen sich
die Gallertmäntel auf den einzelnen Körnchen zu den Isoliermänteln.

Als Löslichkeitsbeschleuniger empfiehlt sich quervernetztes
NaCMC (= Natriumcarboxymethylcellulose), das auch unter dem
Handelsnamen Ac-Di-Sol bekannt ist, und/oder quervernetztes
PVP (= Polyvinylpyrrolidon) das auch unter dem Handelsnamen
PLASTONE bekannt ist, und/oder modifizierte Stärke, deren
Modifikation das Quellverhalten begünstigt. Eine solche modifizierte Stärke, die bevorzugt als Löslichkeitsbeschleuniger
eingesetzt wird, ist NaCMS (= Natriumcarboxymethylstärke =
das Natriumsalz des Carboxymethyläthers der Stärke = englisch:
sodium starch glycolate). Diese modifizierte Stärke ist unter dem Handelsnamen PRIMOJEL bekannt.

Bemerkenswert ist, daß bei dieser Süßungstablette keinerlei
Substanzen erforderlich sind, die verdauliche Kohlenhydrate,
die zum Beispiel von Diabetikern berücksichtigt werden
müßten, enthalten und keine Substanzen dem Süßungsmittel zugesetzt werden müssen, die verdaulich sind und der Joule-
Bilanz zugerechnet werden müssen.

Das Tablettierhilfsmittel dient vorzugsweise als Gleitmittel beim Pressen der Tabletten. Dafür empfiehlt sich GPS
(= Glycerinpalmitostearat), das auch unter der Handelsbezeichnung PRECIROL bekannt ist, und L-Leucin. Beim Einsatz
geeigneter, moderner Tablettiermaschinen kann man auf das
Tablettierhilfsmittel unter Umständen ganz verzichten.

Beispiel 1:

Es werden eingesetzt:
als Süßungsmittel 180 g (Gramm) = 77,89 % APM mit einer Korngröße im Bereich von 0,01 bis 0,2 mm,
als Löslichkeitsbeschleuniger 50 g = 21,64 % quervernetztes NaCMC,
als Tablettierhilfsmittel 1 g = 0,47 % GPS, und
275 ml (Milliliter) destilliertes Wasser.
Dabei sind die Prozentangaben Trockengewichtsprozente.

Tablettierung:
Das NaCMC und APM werden gemischt und mit dem Wasser versetzt. Diese Mischung wird durch ein Sieb mit 1,6 mm Maschenweite getrieben und in einer Schichtstärke von 1 cm (Zentimeter) bei 70°C (Grad Celsius) über 5 Stunden getrocknet bis auf eine Restfeuchte von 3 %. Die so gewonnene Trockensubstanz wird durch ein Sieb mit 0,3 mm Maschenweite getrieben und mit dem GPS vermischt. Die dabei gewonnene, gut fließfähige Pulvermischung wird zu Tabletten verpreßt.

Eigenschaften der hergestellten Tabletten:
Gewicht einer fertigen Tablette:     23 mg (Milligramm);
Abmessungen einer fertigen Tablette: rund, Durchmesser 3 mm;
Auflösungszeit in 18°C warmem Wasser innerhalb von 60 Sekunden;
Farbe der Tablette: weiß;
Stabilität bei Lagerung der Tablette über 90 Tage bei 35°C und 80 % relativer Luftfeuchtigkeit: keinerlei Veränderung.

Die nachfolgenden Beispiele unterscheiden sich vom Beispiel 1 nur durch die Angaben aus der nachfolgenden Tabelle.

TABELLE:

| es wurde eingesetzt | 2. Beispiel | 3. Beispiel |
|---|---|---|
| A Süßstoffmenge | 190 g | 180 g |
| B Korngröße von A | 0,2 - 0,4 mm | 0,01 - 0,2 mm |
| C Löslichkeitsb. | NaCMC | NaCMC |
| D Menge von C | 10 g | 75 g |
| E Tablettierhilfsm. | ---- | GPS |
| F Menge von E | 0 g | 2,5 g |
| G Wassermenge | 275 ml | 275 ml |
| Eigenschaften der fertigen Tablette | | |
| H Gewicht | 20 mg | 25,5 mg |
| I Abmessungen | 2 mm ⌀ | 3 mm ⌀ |
| K Auflösungszeit* | innerh. 120 sec | innerh. 120 sec |
| L Stabilität* | wie Beispiel 1 | wie Beispiel 1 |
| M Farbe | wie Beispiel 1 | wie Beispiel 1 |

TABELLE - Fortsetzung

| Beispiel | 4 | 5 |
|---|---|---|
| A | 180 g | 180 g |
| B | 0,05 - 0,1 mm | 0,1 - 0,4 mm |
| C | PVP | NaCMS |
| D | 50 g | 50 g |
| E | L-Leucin | ---- |
| F | 2,0 g | 0 g |
| G | 275 ml | 275 ml |
| H | 23 mg | 23 mg |
| I | 3 mm ⌀ | 3 mm ⌀ |
| K | innerh. 60 sec | innerh. 90 sec |
| L | wie Beispiel 1 | wie Beispiel 1 |
| M | wie Beispiel 1 | wie Beispiel 1 |

* jeweils unter den Bedingungen wie im Beispiel 1 angegeben.

Wie aus den Beispielen ersichtlich, wird bei einem zu hohen Anteil an Löslichkeitsbeschleuniger die Löslichkeit beeinträchtigt, und zwar weil die Tablette im Wasser zunächst äußerlich schleimig aufquillt und dadurch der weitere Wasserzutritt ins Innere der Tablette behindert wird. Der Gehalt an Löslichkeitsbeschleuniger nach Beispiel 3 ist noch für eine in kaltem Wasser schnell lösliche Tablette vertretbar.

Bei zu geringem Anteil an Löslichkeitsbeschleuniger ist die Löslichkeit beeinträchtigt, und zwar weil zu wenig Isoliermaterial vorhanden ist. Die Tablette zerfällt dann zwar zunächst sehr schnell, aber nur in große, schwer lösliche Klumpen. Der Gehalt an Löslichkeitsbeschleuniger nach Beispiel 2 ist gerade noch ausreichend für eine in kaltem Wasser hinreichend schnell lösliche Tablette.

- 7 -

Patentansprüche:

1. Wasserlösliche, durch Pressen verfestigte Süßungstablette mit APM (= L-Aspartyl-L-phenylalaninmethylester) als Süßungsmittel und einem Bruchteil des APM-Gewichtes an Löslichkeitsbeschleuniger, dadurch gekennzeichnet, daß, bezogen auf das Trockengewicht, eingesetzt sind:

    70 bis 95 % APM mit einer Korngröße von 0,01 bis 0,4 mm, 0 bis 1 % Tablettierhilfsmittel, und

    der Rest Löslichkeitsbeschleuniger, der ein in Wasser quellender Gallertbildner ist;

und daß die eingesetzten APM-Körnchen mit einem Isoliermantel umhüllt sind, der aus eingetrockneter Gallerte des Löslichkeitsbeschleunigers besteht.

2. Süßungstablette nach Anspruch 1, dadurch gekennzeichnet, daß der Löslichkeitsbeschleuniger aus quervernetztem NaCMC (= Natriumcarboxymethylcellulose) besteht.

3. Süßungstablette nach Anspruch 1, dadurch gekennzeichnet, daß der Löslichkeitsbeschleuniger aus quervernetztem PVP (= Polyvinylpyrrolidon) besteht.

4. Süßungstablette nach Anspruch 1, dadurch gekennzeichnet, daß der Löslichkeitsbeschleuniger aus modifizierter Stärke besteht, deren Modifikation das Quellverhalten begünstigt.

5. Süßungstablette nach Anspruch 4, dadurch gekennzeichnet, daß der Löslichkeitsbeschleuniger aus NaCMS (= Natriumcarboxymethylstärke) besteht.

6. Süßungstablette nach einem der vorhergehenden Ansprüche, dadurch gekennzeichnet, daß, bezogen auf das Trockengewicht, eingesetzt sind:

    77,89 %   APM,
    21,64 %   NaCMC,
und  0,47 %   GPS (= Glycerinpalmitostearat).

0101756

Nummer der Anmeldung

EP 82 10 8002

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | Patent Abstracts of Japan Band 6, Nr. 139, 28. Juli 1982 & JP-A-57-63 068 | | A 23 L 1/236<br>A 61 K 9/20 |
| A | CH-A- 627 926 (GENERAL FOODS CORP.)<br>* Ansprüche 3, 4, 8 * | | |
| A | BE-A- 660 615 (MONSANTO CO.)<br>* Ansprüche 1, 4 * | | |

RECHERCHIERTE SACHGEBIETE (Int. Cl. ³)

A 23 L 1/00
A 61 K 9/00

Der vorliegende Recherchenbericht wurde für alle Patentansprüche erstellt

| Recherchenort BERLIN | Abschlußdatum der Recherche 29-03-1983 | Prüfer SCHULTZE D |
|---|---|---|